# FASCICULE DE BREVET EUROPEEN

(11) **EP 2 572 100 B1**
(45) Date de publication et mention de la délivrance du brevet: **09.03.2016**
(21) Numéro de dépôt: 11728641.9
(22) Date de dépôt: 20.05.2011
(51) Int. Cl.: F03B 17/06, F03D 3/06, F03D 7/06

(54) **TURBOGENERATEUR A ROTOR A PALES A INCIDENCE ADAPTEE AU VENT APPARENT**
TURBOGENERATOR MIT ROTOR UND ROTORBLÄTTER, DIE SICH AN DEN SCHEINBAREN WIND ANPASSEN
TURBOGENERATOR WITH ROTOR HAVING BLADES ADAPTING TO THE APPARENT WIND

(30) Priorité: 20.05.2010 FR 1002134
(43) Date de publication de la demande: 27.03.2013
(73) Titulaire: Notteghem, Bernard, 71710 Marmagne (FR); Vailleau, Christian, 71510 Essertenne (FR)
(72) Inventeur: NOTTEGHEM, Bernard, 71710 Marmagne (FR)
(74) Mandataire: Novagraaf Technologies
(86) Numéro de dépôt international: PCT/FR2011/000306
(87) Numéro de publication internationale: WO 2011/144830

(56) Documents cités:
- EP-A1- 1 990 540
- WO-A1-2005/100785
- WO-A1-2009/030047
- FR-A- 661 012
- GB-A- 319 963
- GB-A- 2 356 431
- GB-A- 2 448 339
- US-A1- 2010 054 936

## Description

### Domaine technique

La présente invention concerne une évolution d'un turbogénérateur à rotor, notamment de type éolienne à axe vertical, ledit rotor étant muni de pales à incidence variable, voir par exemple EP 1 990 540 A1. La présente invention trouve notamment son application à la fourniture d'électricité, au pompage de l'eau par exemple.

### Technique antérieure

De nos jours, l'énergie éolienne apparaît comme une alternative importante aux sources traditionnelles d'énergies compte tenue notamment de la raréfaction prévue des énergies fossiles. En effet, contrairement à ces sources traditionnelles, l'énergie éolienne est renouvelable et non polluante en termes d'émission gazeuse et de rejet dans l'atmosphère ou sur terre. Le développement de cette énergie éolienne s'est par conséquent récemment accéléré.

On classe généralement les éoliennes dans deux grandes familles : les éoliennes à axe vertical, et les éoliennes à axe horizontal.

L'éolienne à axe horizontal est probablement le type d'éoliennes le plus connu et le plus répandu. Ce type d'éoliennes comporte généralement un rotor de type hélice muni de trois pales fixées par l'une de leurs deux extrémités en un point unique d'un mât, ou d'une tour, vertical(e). Ces pales entraînent en rotation, autour d'un axe horizontal, le rotor qui est relié à un alternateur ou à un générateur disposé dans une nacelle située au sommet du mât. Ce type d'éoliennes est considéré comme le descendant direct des moulins à vent, dont on peut dire que les ailes en bois sont remplacées par des pales d'hélice d'avion.

Toutefois, ce type d'éoliennes s'avère avoir un rendement faible et, pour que la production d'électricité soit rentable avec une puissance fournie suffisante, il est nécessaire d'avoir un champ éolien comportant un nombre élevé d'éoliennes et que ces éoliennes soient de dimensions importantes. En effet, la hauteur du mât a une influence sur la puissance puisque les vents rapides se trouvent en hauteur. De même, la longueur des pales influence également la puissance, puisque ces pales délimitent la surface du disque d'air balayé et que la puissance fournie est proportionnelle à cette surface. Par conséquent, de telles installations ne sont pas compatibles avec un objectif de production individuelle d'électricité, et sont en outre génératrices de nuisances sonores, essentiellement liées à la vitesse d'attaque du disque d'air par les pales et à la poussée coaxiale. Par ailleurs, la maintenance de ce type d'éoliennes est rendue compliquée et dangereuse, puisque la nacelle se trouve au sommet du mât.

L'éolienne d'axe vertical est restée jusqu'à ce jour beaucoup moins répandue et est essentiellement de deux types "Savonius" et "Darrieus" du nom de leur inventeur.

Ainsi, l'éolienne de type Savonius, dont un exemple est décrit dans le brevet français FR 601 266, comprend un rotor constitué d'au moins deux pales identiques semi-cylindriques disposées symétriquement par rapport à l'axe de rotation du rotor et placées de part et d'autre d'un plan de séparation comprenant les bords périphériques et centraux des pales et l'axe de rotation. L'éolienne Savonius présente l'avantage d'être peu encombrante et de démarrer à de faibles vitesses de vent. Toutefois, le rendement des éoliennes construites selon ce type est relativement faible, ne dépassant pas 50% de la limite de Betz (pourcentage maximum théorique de l'énergie du vent pouvant être récupérée) et bien inférieur à celui des éoliennes de type hélice à axe horizontal. De surcroît, ce rotor présente un couple non constant résultant en un fonctionnement heurté en vent irrégulier et en des blocages éventuels au démarrage si les pales sont dans une position telle que la force du vent ne soit pas suffisante pour entraîner le démarrage de l'ensemble.

De même, l'éolienne de type Darrieus repose sur l'effet de portance subit par un profil soumis à l'action d'un vent apparent (effet qui s'exerce sur l'aile d'un avion). On distingue plusieurs déclinaisons autour de ce principe, depuis le simple rotor cylindrique (deux pales chacune en forme d'aile droite et disposées de part et d'autre de l'axe) jusqu'au rotor parabolique où les pales sont recourbées en troposkine et fixées au sommet et à la base de l'axe vertical. Ces éoliennes de type Darrieus sont certes de plus petites dimensions mais sont plus sophistiquées et, bien qu'elles puissent développer une puissance plus grande à taille égale, elles ne sont guère répandues car, d'une part, ici encore la hauteur de l'éolienne a une influence sur la puissance puisque les vents rapides se trouvent en hauteur et, d'autre part, elles démarrent difficilement toutes seules.

Les éoliennes à axe vertical présentent notamment, par rapport aux éoliennes à axe horizontal, l'avantage de permettre une maintenance plus facile, puisque tous les moteurs sont au sol, ou à proximité du sol. Par ailleurs, à puissance égale, la nuisance sonore est réduite. De plus, ce type d'éoliennes est omnidirectionnel et ne nécessite donc pas d'électronique de contrôle de l'orientation des éoliennes.

De telles éoliennes à axe vertical présentent cependant un certain nombre d'inconvénients importants, qui sont en partie à l'origine du fait que ces éoliennes sont moins répandues que les éoliennes à axe horizontal.

Ainsi, pour augmenter leur rendement sans augmenter leurs dimensions de façon exagérée, certaines éoliennes comportent un mécanisme permettant le réglage de l'incidence (ou du pas) des pales de leur rotor. Toutefois, ces mécanismes sont, en règle générale, très complexes et comportent un grand nombre de pièces rendant leur fabrication, leur entretien et leur maintenance complexes et coûteux. En outre, ces mécanismes ne permettent qu'un réglage des pales deux à deux symétriquement par rapport à l'axe de rotation du rotor.

### Exposé de l'invention

Ainsi, c'est l'objet de la présente invention que de proposer un turbogénérateur, par exemple une éolienne à axe vertical, dérivée du type "Darrieus", qui présente un rendement plus élevé avec une surface d'implantation au sol réduite, le tout avec une maintenance aisée à réaliser.

Le but de la présente invention est donc de pallier les inconvénients précédemment cités et de proposer un turbogénérateur à rotor destiné à être placé dans un fluide en mouvement, dont la technologie est particulièrement simple et facile à mettre en oeuvre et permet d'accroître le rendement dudit turbogénérateur. Pour ce faire, ce dernier comporte un mécanisme simple de réglage de l'incidence des pales du rotor.

Conformément à l'invention, il est donc proposé un turbogénérateur comportant un support, un rotor apte à pivoter autour d'un axe principal par rapport audit support et pourvu d'au moins deux pales montées chacune pivotante autour d'un axe secondaire sur au moins une embase couplée audit rotor, remarquable en ce qu'il comporte un moyen de réglage de l'incidence desdites pales comprenant au moins une came et au moins un organe suiveur solidaire de chacune desdites pale et apte à coopérer avec ladite came pour orienter indépendamment chacune desdites pale, la forme de ladite came étant telle qu'elle permet une adaptation de l'incidence optimale choisie de chacune desdites pales par rapport au vent apparent, en chaque point du cercle parcouru par ledit axe secondaire de chaque pale lors de la rotation dudit rotor autour de son axe principal, pour un rapport défini entre les valeurs du vent réel et du vent linéaire généré par le déplacement desdites pales.

### Description sommaire des dessins

D'autres avantages et caractéristiques ressortiront mieux de la description qui va suivre d'une variante d'exécution d'un turbogénérateur à rotor selon l'invention en référence aux figures annexées sur lesquelles :
- la figure 1 est une vue en perspective d'un turbogénérateur à rotor à incidence de pales variable selon l'invention ;
- la figure 2 est une vue de dessus de la came d'un turbogénérateur selon la figure 1 ;
- la figure 3 est une section transversale d'une pale du rotor selon la figure 1 ;
- la figure 4 est une représentation schématique du vent apparent en différents points du cercle parcouru par l'axe d'une pale lors de la rotation du rotor autour de son axe de rotation ;
- la figure 5 est une représentation schématique de l'incidence d'une pale aux différents points de la figure 4 ;
- la figure 6 est une vue partielle de dessus turbogénérateur selon l'invention avec sa came en position de fonctionnement optimal ;
- la figure 7 est une vue partielle de dessus turbogénérateur selon l'invention avec sa came en position déplacée.

### Description des modes de réalisation

On décrira, dans ce mode d'exécution non limitatif, un turbogénérateur à rotor de type éolienne à axe vertical, toutefois, le turbogénérateur, selon l'invention, peut évidemment être employé comme éolienne à axe horizontal ou comme hydrolienne à axe horizontal ou vertical.

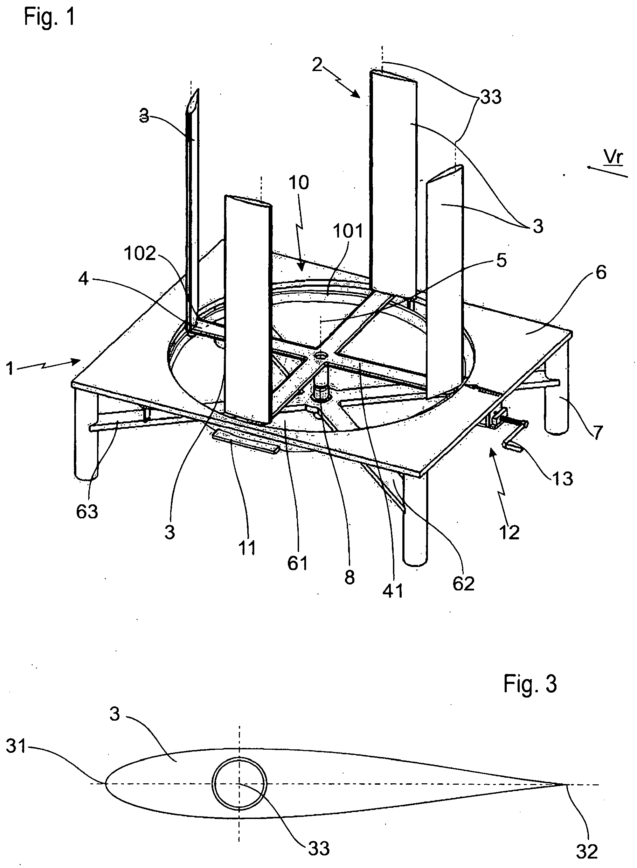

Ainsi, on a représenté sur les figures 1 à 3 un turbogénérateur 1 à rotor 2 comportant au moins deux pales 3 montées chacune pivotante sur une embase 4, ledit rotor 2 étant apte à pivoter autour d'un axe principal 5 de rotation vertical par rapport à un support 6 rigide et sensiblement plan, ledit support 6 étant de préférence maintenu à distance du sol par une pluralité de poteaux 7 latéraux eux-mêmes fixés sur le sol.

En référence à la figure 3, les pales 3 sont de préférence des ailes rectangulaires dont la section est biconvexe symétrique de type NACA 0015 par exemple. Les profils NACA correspondent à des formes d'ailes d'avions mis au point par le Comité consultatif national de l'aéronautique (National Advisory Committee for Aeronautics : NACA). La forme des profils NACA est décrite en utilisant une série de chiffres après le mot « NACA ». Les paramètres du profil contenu sont contenus dans le code numérique qui peut être entré en équations afin de générer précisément la section transversale de l'aile et de calculer ses propriétés. Par exemple, le NACA 0015 est symétrique, le "00" indiquant que l'aile est symétrique. Le "15" indique que l'aile a une épaisseur égale à 15% de la valeur de sa largeur (ou corde). Lors de la rotation du rotor 2, les pales 3 vont changer de bord et les deux faces verticales des pales 3 vont donc être alternativement sollicitées par le vent, l'utilisation d'un profil biconvexe symétrique de type NACA 0015 pour lesdites pales 3 est donc particulièrement avantageuse.

Selon un mode réalisation préférentiel, le rotor 2 comprend quatre pales 3 disposées symétriquement par rapport audit axe principal 5 vertical. Chaque pale 3 comprend un bord d'attaque 31 et un bord de fuite 32, et est montée pivotante autour d'un axe secondaire 33 vertical sur l'embase 4 dudit rotor 3. L'axe secondaire 33 de chaque pale 3 est sensiblement parallèle audit axe principal 5 et de préférence situé légèrement en avant de leur centre de poussée (en direction du bord d'attaque 31), de sorte que la pale 3 reste stable dans le lit du vent et que l'effort à appliquer sur le bord de fuite 32 pour donner une incidence à ladite pale 3 reste faible.

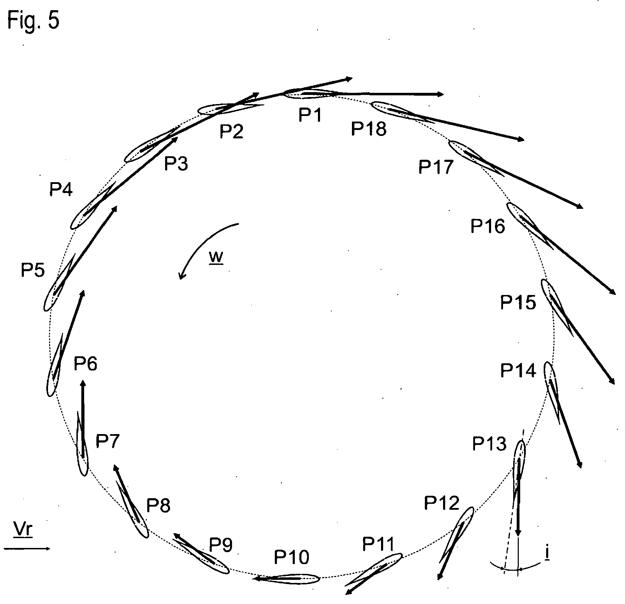

On rappelle que l'incidence est l'angle que fait la pale 3 par rapport à la direction du vent. Sur la figure 5, l'incidence est représentée par l'angle i.

De même, on rappelle que lorsque la pale 3 est placée dans le lit du vent son incidence est nulle, la pale 3 est alors parallèle à l'axe du vent.

L'embase 4 est avantageusement en forme générale de croix à quatre bras 41, chacun des bras 41 recevant à son extrémité libre une pale 3. En outre, l'embase 4 est apte à pivoter par rapport au support 6 du turbogénérateur 1 autour de l'axe principal 5. Pour ce faire, le turbogénérateur 1 comporte un pivot 8 reliant l'embase 4 et le support 6. Pour des raisons évidentes d'équilibre, le pivot 8 est disposé au centre de la croix de l'embase 4.

Le support 6 comporte avantageusement une plaque 61 en forme générale de quadrilatère et possède un poteau 7 disposé à chacun de ses angles. La plaque 61 comprend en outre un orifice 62 disposé au voisinage de son milieu et dont les dimensions sont légèrement supérieures à celles du rotor 2 de sorte à ce que l'embase 4 dudit rotor 2 traverse en partie ledit orifice 62. Le support 6 comprend également un croisillon 63 à quatre bras 64, chacun des bras 64 étant à son extrémité libre solidaire d'un des poteaux 7. Ce croisillon 63 fait office de contreventement et est apte à recevoir en son centre le pivot 8 permettant la rotation du rotor 2.

Pour augmenter le rendement du turbogénérateur 1 selon l'invention, on peut modifier l'incidence des différentes pales 3 du rotor 2. Toutefois, il est nécessaire de bien choisir la valeur de l'incidence. En effet, l'incidence a également une influence sur la portance et la trainée de la pale 3. Ainsi, une grande incidence (de l'ordre de 14 degrés) permet d'obtenir un effort de portance important et donc une force de propulsion importante, mais génère également une trainée importance et donc une dégradation des qualités aérodynamiques de la pale 3. A l'inverse, une faible incidence (de l'ordre de quelques degrés) permet d'obtenir une faible trainée et donc de bonnes qualités aérodynamiques de la pale 3, mais génère également un effort de portance faible et donc un rendement de la pale 3 faible. De plus, une incidence trop élevée peut engendrer le décrochage de la pale 3, ce qui correspond au moment où la portance n'augmente plus et chute plus ou moins brutalement, et où la traînée augmente fortement. On désignera par incidence optimale choisie l'incidence qui permet d'obtenir le meilleur rendement du turbogénérateur dans des conditions données.

On réglera de préférence l'incidence optimale choisie des pales 3 du rotor 2 à la finesse optimale du profil de la pale 3, soit par exemple 6 degrés pour le NACA0015. Cette valeur d'incidence optimale est le meilleur compromis entre portance et trainée car c'est l'incidence qui permet notamment à un planeur de parcourir la plus longue distance par rapport à l'altitude perdue.

Par ailleurs, il est primordial qu'en tout point du cercle 34 l'incidence s'adapte non pas par rapport au vent réel Vr mais par rapport au vent apparent Va (ou vent relatif en aéronautique) qui évolue en chaque point du cercle 34 parcouru par l'axe secondaire 33 de chaque pale 3 lors d'une rotation du rotor 2 autour de son axe principal 5.

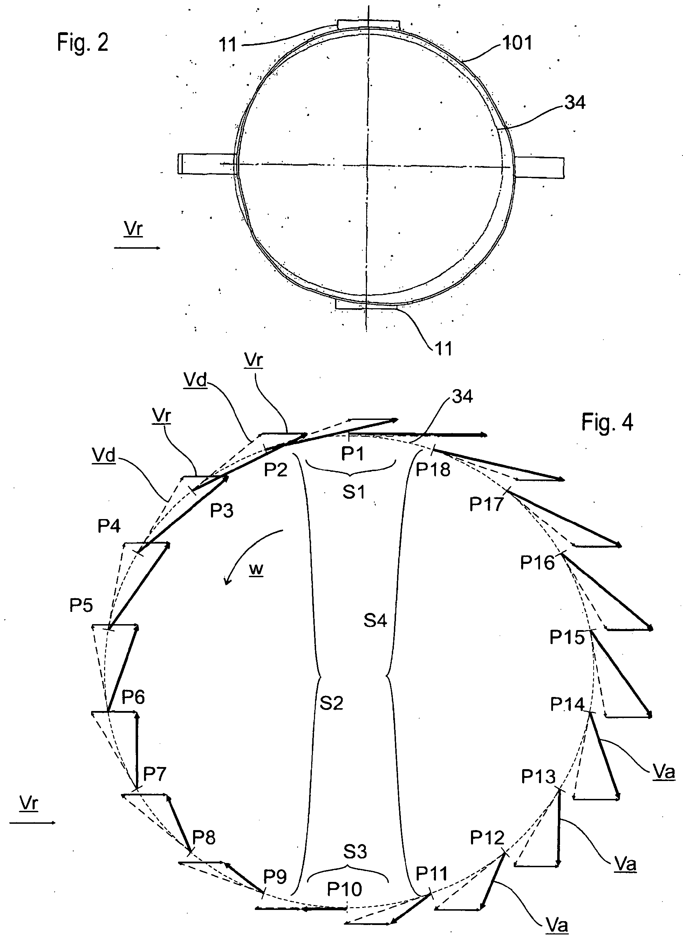

Cette adaptation de l'incidence de la pale 3 par rapport au vent apparent Va permet de garantir le rendement maximal pour des conditions données de vent réel Vr et de vitesse de rotation du rotor 2. En effet, si l'incidence des pales 3 était adaptée par rapport au vent réel Vr, lorsque les pales 3 se trouvent dans les positions situées entre les points P5 et P6 (représentés sur la figure 4) et entre les points P14 et P15 (représentés sur la figure 4), lesdites pales 3 seraient alors quasiment dans le lit du vent réel Vr (c'est-à-dire quasiment parallèles au vent réel Vr) et, par conséquent, feraient obstacle à la rotation du rotor 2,. En effet, dans lesdites positions, les pales 3 seraient alors sensiblement perpendiculaires à la tangente du cercle 34 parcouru par l'axe secondaire 33 de chaque pale 3.

Sur la figure 4, on a représenté en trait fort le vent apparent Va en différents points P1 à P18 du cercle 34 parcouru par l'axe d'une pale 3 lors de la rotation du rotor 2 autour de son axe principal 5. Les composantes vectorielles du vent apparent Va sont le vent réel Vr et le vent Vd linéaire généré par le déplacement de la pale 3 et sont respectivement représentées en trait fin et en trait pointillé. On constate, d'une part, que la valeur et la direction du vent apparent Va le long du cercle 34 parcouru varie constamment et, d'autre part, que la répartition des valeurs du vent apparent Va ne possède pas de symétrie ni par rapport à la direction du vent réel Vr ni par rapport à l'axe principal 5 du rotor 2.

Le vent Vd est fonction de la vitesse de rotation w et du diamètre du rotor 2 du turbogénérateur 1 et sa valeur a été choisie égale à deux fois celle du vent réel Vr pour la représentation schématique du vent apparent Va sur la figure 4.

Ainsi, conformément à la figure 4, on constate qu'aux points P1 et P10 la pale 3 du rotor 2 se trouvera respectivement en vent réel Vr et vent apparent Va debouts, et en vent réel Vr arrière mais en vent apparent Va debout. Ces deux conditions de vent apparent Va ne sont pas intéressantes pour des questions de rendement et/ou d'instabilité de ladite pale 3. Par conséquent, en ces points P1 et P10 et dans les secteurs du cercle 34 parcouru par la pale 3 situés juste avant et juste après lesdits points P1 et P10, la pale 3 sera placée dans le lit du vent apparent Va de sorte à diminuer la résistance du rotor 2 audit vent apparent Va et à ne pas trop dégrader le rendement du turbogénérateur 1.

De part et d'autre desdits secteurs du cercle 34 parcouru par la pale 3, la pale 3 effectue un changement de bord par rapport au vent apparent Va de manière à avoir toujours ladite pale 3 soumise à un vent apparent Va de travers et de secteur avant. En effet, sans ce changement de bord, les pales 3 auraient, entre les points allant de P1 à P10 dans le sens antihoraire, une incidence négative par rapport au vent apparent Va et exerceraient alors une force de freinage néfaste au rendement global du turbogénérateur 1.

Enfin, on comprend bien que l'orientation du vent apparent Va en un point déterminé du cercle 34 parcouru par la pale 3 ne dépend que du rapport entre le vent réel Vr et le vent Vd linéaire généré par le déplacement de la pale 3. Il est donc possible, en tout point du cercle 34, de travailler toujours avec un vent apparent Va de direction inchangée, quelque soit la valeur du vent réel Vr, en décidant par exemple de limiter la vitesse de rotation du rotor 2 du turbogénérateur 1 en adaptant la puissance demandée au générateur électrique (non représenté) couplé audit rotor 2 à la vitesse du vent réel Vr, mesurée par un anémomètre par exemple. Afin de simplifier le turbogénérateur 1 selon l'invention en ne prévoyant pas de possibilité de modification du réglage de l'incidence des pales 3, il est avantageux de travailler avec un vent apparent Va de direction constante.

Il est donc important de définir le bon rapport entre le vent réel Vr et le vent Vd en cherchant le bon compromis entre la vitesse du vent apparent Va et la possibilité de son exploitation aérodynamique pour un profil de pale 3 bien défini. En effet, si le rapport entre le vent réel Vr et le vent Vd est trop faible (Vd plus petit que Vr), alors le vent apparent Va sera, d'une part, trop faible pour permettre le démarrage du turbogénérateur 1 et, d'autre part, un vent arrière dans le secteur situé avant et après le point P10 créé ainsi une zone d'instabilité de la pale 3 dans ledit secteur. En revanche, si le rapport entre le vent réel Vr et le vent Vd est trop grand (Vd supérieur à Vr), alors le vent apparent Va se rapprochera de la tangente du cercle 34 parcouru par la pale 3 et tendra vers un vent debout par rapport à ladite pale 3, les secteurs d'inefficacité du turbogénérateur 1 (pales dans le lit du vent apparent Va) situés avant et après les points P1 et P10 vont donc s'allonger diminuant d'autant le rendement du turbogénérateur 1. De plus, si le vent Vd augmente trop, il sera nécessaire de renforcer mécaniquement le turbogénérateur 1 à cause d'une force centrifuge trop importante, ce qui aurait pour effet d'accroître le poids et le prix de revient dudit turbogénérateur 1. Une vitesse de vent Vd limitée à deux ou trois fois celle du vent réel Vr semble être un bon compromis entre vent apparent Va trop faible et un vent apparent Va trop debout. Sur la figure 4, la vitesse de vent Vd est deux fois plus grande que celle du vent réel Vr, ce qui permet d'avoir la pale 3 située au point P10 soumise à un vent apparent Va debout et non à un vent apparent Va arrière générateur d'instabilité. En effet, au point P10, le vent apparent Va est un vent debout car il est égal à la différence entre le vent Vd (debout) et le vent réel Vr (arrière) et le vent Vd est deux fois plus grand que le vent réel Vr. Cette configuration est avantageuse car il n'y a pas de vent apparent Va arrière sur tout le long du cercle 34 parcouru par la pale 3 du rotor 2.

De plus, si le rapport entre le vent réel Vr et le vent Vd diminue ou inversement augmente, alors l'incidence diminue ou inversement augmente, et le rendement du turbogénérateur 1 se dégrade car les pales 3 ne sont plus à l'incidence optimale par rapport au vent apparent Va. Pour obtenir, en tout point du cercle 34 parcouru par l'axe secondaire 33 d'une pale 3 lors de la rotation du rotor 2, une adaptation de l'incidence des pales 3 dudit rotor 2 par rapport à un vent apparent Va avantageusement de direction constante, le turbogénérateur 1 comporte un moyen de réglage 10.

Ce moyen de réglage 10 comprend une came 101 disposée de préférence sous le rotor 2 et un organe suiveur 102 solidaire de chacune des pales 3 et apte à coopérer avec ladite came 101 pour permettre l'adaptation, le long du cercle 34 parcouru par l'axe secondaire 33 des pales 3 lors de la rotation du rotor 2, de l'incidence optimale choisie de chacune des pales 3 par rapport au vent apparent Va.

On comprend alors bien qu'il est important de faire travailler le turbogénérateur 1 dans des conditions où ledit rapport entre le vent réel Vr et le vent Vd est fixe, car ledit rapport est un des facteurs déterminant la forme de la came 101.

En référence à la figure 2, la came 101 est de préférence une lame métallique dont la forme est déterminée par la courbe décrite notamment par l'extrémité basse du bord de fuite d'une pale 3, lorsque ladite pale 3 est à l'incidence optimale choisie par rapport au vent apparent Va en chaque point du cercle 34 parcouru par l'axe d'une pale 3 lors de la rotation du rotor 2. On a représenté sur la figure 5 la forme obtenue pour une incidence optimale choisie dé 6 degrés (correspondant à la finesse optimale du profil NACA0015) et pour un vent apparent Va déterminé avec un rapport entre les valeurs du vent réel Vr et du vent Vd égal à 2(situation de la figure 4).

Pour ce faire, la came 101 comporte au moins quatre secteurs S1 à S4. Dans les premier et troisième secteurs S1 et S3, les pales 3 seront réglées pour être parallèles au vent apparent Va, car ces secteurs sont inefficaces comme précédemment décrit. Lesdits premier et troisième secteurs S1 et S3 sont donc situés avant et après les deux points placés à chacune des extrémités du diamètre du cercle 34 parcouru par les axes secondaires 33 des pales 3 perpendiculaire à la direction du vent réel Vr. Les deuxième et quatrième secteurs S2 et S4 sont disposés de part et d'autre des premier et troisième secteurs S1 et S3. Dans ces deuxième et quatrième secteurs S2 et S4, les pales 3 sont de préférence adaptées par rapport au vent apparent Va pour une incidence optimale choisie (soit avantageusement 6 degrés pour une pâle 3 avec un profil NACA0015) avec toutefois un changement de bord desdites pales 3 entre le deuxième secteur S2 et le quatrième secteur s4 et entre le quatrième secteur s4 et le deuxième secteur S2, pour les raisons expliquées précédemment.

Sur les figures 4 et 5, les premier et troisième secteurs S1 et S3 s'étendent dans le sens antihoraire respectivement entre les points P18 et P2 et entre les points P9 et P11, les points P18, P2, P9 et P11 étant exclus des premier et troisième secteurs S1 et S3. De même, les deuxième et quatrième secteurs S2 et S4 s'étendent dans le sens antihoraire respectivement du point P2 au point P9 et du point P11 au point P18.

Ainsi, la forme de la came 101 donne parfaitement l'incidence recherchée à la pale 3 en chaque point du cercle 34 parcouru, de sorte à obtenir un rendement maximal de la pale 3, lorsqu'elle se trouve dans les deuxième et quatrième secteurs S2 et S4.

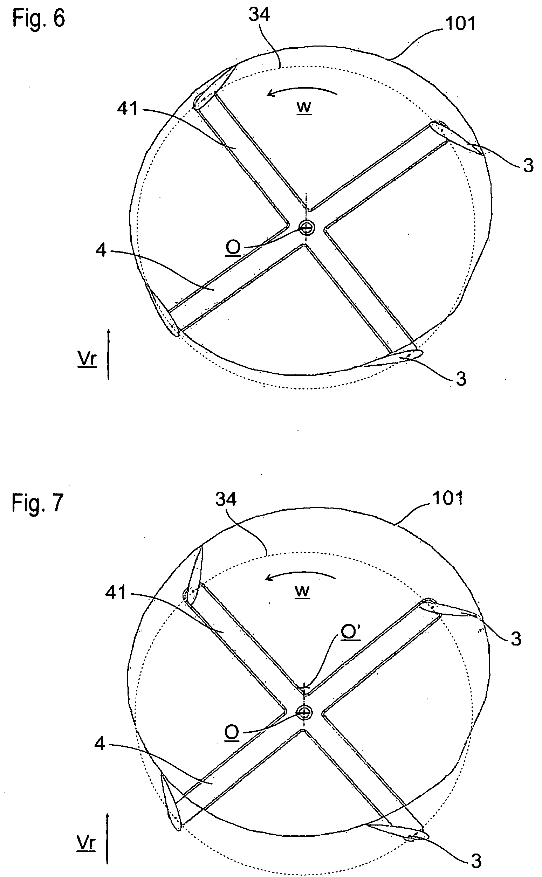

Les organes suiveurs 102 sont de préférence des biellettes disposées avantageusement au droit de l'extrémité basse du bord de fuite 32 de chacune des pales 3 et reliées à la came 101 du turbogénérateur 1, de sorte que ledit bord de fuite 32 décrive la forme de la came 101 lors d'une rotation du rotor 2 autour de son axe principal 5, comme cela est représenté sur les figures 6 et 7. De ce fait, lors d'une rotation du rotor 2, chaque organe suiveur 102 permet un réglage indépendant du positionnement de la pale 3 associée en tout point du cercle 34 parcouru par l'axe secondaire 33 de ladite pale 3.

Les organes suiveurs 102 pourront ne pas être disposés au droit de l'extrémité basse du bord de fuite 32 de chacune des pales 3, sans sortir du cadre de la présente invention. L'Homme du Métier n'aura aucune difficulté à adapter la forme de la came 101 en fonction de la position desdits organes suiveurs 102.

On comprend bien que la forme de la came 101, qui permet une adaptation optimale par rapport au vent apparent Va de l'incidence de chacune desdites pales 3 en chaque point P1-P18 du cercle 34 parcouru par ledit axe secondaire 33 de chaque pale 3 lors de la rotation dudit rotor 2 autour de son axe principal 5 pour un rapport défini entre les valeurs du vent réel Vr et du vent Vd, dépend dudit rapport entre le vent réel Vr et le vent Vd, de l'angle d'incidence optimal choisi, du diamètre du cercle 34 parcouru par l'axe secondaire 33 de chaque pale 3 et de la dimension de la largeur (ou corde) de la pale 3 en général et plus particulièrement la distance entre l'axe secondaire 33 de ladite pale 3 et l'organe suiveur 102 associé à ladite pale 3.

Toutefois, un autre facteur peut éventuellement jouer. En effet, les pales 3 sous le vent sont perturbées par le sillage des pales 3 au vent (ce phénomène est très perceptible sur un voilier lorsque que l'on croise de près un autre voilier et est nommé phénomène du «déventement»). Il sera alors particulièrement intéressant, notamment pour des pales 3 de grandes dimensions, de visualiser les flux d'air en soufflerie, de façon à étudier l'éventuelle modification de la direction des vents sur la moitié du cercle 34 pour laquelle les pales 3 sont sous le vent et, le cas échéant, de modifier légèrement la forme de la came 101 obtenue par la théorie par pallier à ce phénomène. L'Homme du Métier n'aura aucune difficulté pour réaliser ladite modification compte tenu de tout ce qui précède.

En outre, la came 101 du turbogénérateur 1 selon l'invention est montée sur des glissières 11 solidaires du support 6 de sorte à être mobile par rapport audit support 6 et à l'embase 4. Ce déplacement s'effectue à l'aide d'un organe de translation 12 comportant, par exemple, une manivelle 13. Ledit organe de translation 12 est avantageusement du type vis-écrou, l'écrou étant solidaire du support 6 et la vis étant solidaire de la came 101 à l'une de ses extrémités et comportant ladite manivelle 13 à l'autre extrémité. Ainsi, en tournant la manivelle 13 la vis se déplace en entrainant la came 101.

La manivelle 13 pourra être remplacée par tout organe procurant les mêmes effets tel que, par exemple, un moteur électrique, sans sortir du cadre de la présente invention.

Ce déplacement de la came 101 s'effectue selon un axe parallèle à la direction du vent réel Vr et permet notamment de réduire l'incidence des pales 3 lorsque le vent apparent Va devient trop élevé. En effet, comme le vent Vd n'augmente pas, on comprend bien que, si le vent réel Vr augmente, alors la direction du vent apparent Va varie et donc l'incidence augmente engendrant une dégradation du rendement du turbogénérateur 1.

Toutefois, le déplacement de la came 101 pourra s'effectuer selon un axe légèrement divergent de la direction du vent réel Vr, sans sortir du cadre de la présente invention.

En effet en référence aux figures 6 et 7, si la came 101 se déplace du point 0 en direction du point O' dans le sens et sur le même axe que le vent réel Vr, on constate que l'incidence des pales 3 diminue fortement (cette manipulation revient à faire ce que l'on nomme "choquer" en terme de navigation maritime sur voilier)

Ainsi, en tout point du cercle 34, les incidences des pales 3 ont nettement diminuées, de façon non homogène, puisque le même déplacement du bord de fuite n'aura le même résultat en tout point dudit cercle 34, pour des raisons évidente de géométrie notamment de la came 101.

Le déplacement de la came 101 ainsi défini est évidemment très intéressant en cas d'augmentation trop importante du vent réel Vr, notamment pour réduire les efforts appliqués sur les pales 3.

Toutefois, ce déplacement de la came 101 est également intéressant lors du démarrage du turbogénérateur 1. En effet, si nous arrêtons le turbogénérateur 1 sans toucher à l'incidence des pales 3, nous constatons que celles-ci, au niveau du vent de travers, sont presque perpendiculaires à l'axe du vent apparent Va qui se superpose, lorsque le turbogénérateur 1 ne tourne pas encore, au vent réel Vr. Elles sont alors de toute évidence "décrochées", c'est dire que si l'incidence est trop importance (de manière générale supérieure à environ 14 degrés), la portance chute alors brutalement car l'écoulement le long des pales 3 devient tourbillonnaire et par conséquent le turbogénérateur 1 ne peut pas être entrainé en rotation et donc démarré (ce phénomène de "décrochage" explique que certains éoliennes de type "Darrieus" ne peuvent pas démarrer seules)

Ainsi le recul de la came 101 va permettre aux pales 3 de retrouver une incidence efficace pour permettre un démarrage du turbogénérateur 1. Ensuite, le turbogénérateur 1 va tourner de plus en plus vite, il faudra alors déplacer la came 101 à contre sens du vent réel Vr, jusqu'à obtenir l'incidence optimale recherchée par rapport au vent apparent Va.

On comprend bien que le déplacement de la came 101 ne permet pas d'obtenir une adaptation optimale et homogène de l'incidence des pales 3, mais il permet une adaptation avec une précision suffisante pour exploiter le turbogénérateur 1 dans des conditions de vent réel Vr plus rapides. Pour obtenir l'adaptation optimale et homogène de l'incidence, il faudrait soit pouvoir déformer la came 101 soit mettre en place une nouvelle came 101, ce qui rendrait la mise en oeuvre et l'utilisation du turbogénérateur 1 peu pratique.

On comprend bien que le turbogénérateur 1 selon l'invention doit être agencé pour s'orienter par rapport à la direction du vent réel Vr afin de positionner correctement la came 101 par rapport à ladite direction du vent réel Vr. Le turbogénérateur 1 sera par conséquent monté sur un pivot (non représenté) permettant ladite orientation.

Par ailleurs, le turbogénérateur 1 est prévu pour évoluer dans des conditions normales de vent. Ainsi, pour éviter une dégradation voire une destruction du turbogénérateur 1 à cause de vents trop élevés, le turbogénérateur 1 comporte également des moyens de débrayage (non représentés) du rotor 2 et des pales 3 afin de rendre leurs rotations libres et de placer les pales 3 dans le lit du vent réel Vr.

Pour réaliser le turbogénérateur 1 selon l'invention, l'Homme du Métier n'aura aucune difficulté à choisir les matériaux, tels que par exemple des métaux, des alliages métalliques, de la fibre de verre ou de carbone et du polystyrène.

On comprend bien, d'après la description qui précède, que le turbogénérateur 1 est de conception et de réglage particulièrement simples (pas de système de gestion électronique de l'incidence des pales 3) et ne nécessite que peu de maintenance et d'entretien. Le prix de revient et le coût d'exploitation d'un tel turbogénérateur 1 sont donc très faibles pales par rapport à hélice.

De même, on comprend bien qu'en réglant les pales 3 à l'incidence optimale sur la majorité du cercle 34 parcouru par l'axe secondaire 33 d'une pale 3 lors de la rotation du rotor 2 autour de son axe principal 5 (les deuxième et quatrième secteurs S2 et S4), on obtient un rendement maximal sans mettre en oeuvre des technologies complexes et onéreuses.

Enfin, on comprend bien que pour produire de l'électricité le rotor 2 du turbogénérateur 1 est couplé avec un alternateur (non représenté).

Dans ce qui a été décrit précédemment, l'axe principal 5 est vertical, mais il pourra être horizontal par exemple sans sortir du cadre de la présente invention. Quoiqu'il en soit, il est avantageux que le turbogénérateur 1 soit disposé de sorte que cet axe principal 5 soit sensiblement perpendiculaire à la direction du vent réel Vr.

Ainsi, la configuration non représentée, selon laquelle le turbogénérateur 1 est disposé avec un axe principal 5 horizontal, peut être intéressante pour limiter au maximum les efforts mécaniques sur les pales 3 lorsque le turbogénérateur 1 est à l'arrêt. En effet, dans cette configuration, lorsque que le turbogénérateur 1 est arrêté, il suffit de le faire pivoter de 90° autour d'un axe vertical afin de placer son axe principal 5, mais également l'axe secondaire 33 des pales 3, parallèlement à la direction du vent réel Vr, les pales 3 n'étant alors quasiment plus sollicitées par le vent réel Vr.

### Possibilités d'application industrielle

Le turbogénérateur 1 selon l'invention est principalement destiné à être utilisé comme éolienne à axe vertical, mais il peut également être installé suivant un axe horizontal ou bien être utilisé comme hydrolienne d'axe vertical ou horizontal placé dans des courants d'eau.

Par ailleurs, le turbogénérateur 1 peut également être couplé à d'autre machine qu'un alternateur, telle qu'une pompe par exemple.

Enfin, il va de soi que l'exemple de turbogénérateur 1 conforme à l'invention qui vient d'être décrit n'est qu'une illustration particulière, en aucun cas limitative de l'invention.

## Revendications

1. Turbogénérateur (1) comportant un support (6), un rotor (2) apte à pivoter autour d'un axe principal (5) par rapport audit support (6) et pourvu d'au moins deux pales (3) montées chacune pivotante autour d'un axe secondaire (33) sur au moins une embase (4) couplée audit rotor (2), ledit turbogénérateur (1) comportant un moyen de réglage (10) de l'incidence desdites pales (3) comprenant au moins une came (101) et au moins un organe suiveur (102) solidaire de chacune desdites pales (3) et disposé au droit du bord de fruite (32) à l'extrémité basse de chacune desdites pales, l'organe suiveur (102) étant apte à coopérer avec ladite came (101) pour orienter indépendamment chacune desdites pale (3), la forme de ladite came (101) étant telle qu'elle permet une adaptation de l'incidence optimale choisie de chacune desdites pales (3) par rapport au vent apparent (Va), en chaque point (P1-P18) du cercle (34) parcouru par ledit axe secondaire (33) de chaque pale (3) lors de la rotation dudit rotor (2) autour de son axe principal (5), pour un rapport défini entre les valeurs du vent réel (Vr) et du vent (Vd) linéaire généré par le déplacement desdites pales (3), ladite came (101) ayant une forme déterminée par la courbe décrite par l'extrémité basse du bord de fuite d'une pale (3) lorsqu'elle est à l'incidence optimale choisie par rapport au vent apparent (Va) en chaque point dudit cercle (34) et ladite came (101) étant mobile par rapport audit support (6) et à ladite embase (4) selon un axe parallèle à la direction du vent réel (Vr) afin de faire varier l'incidence des pales (3) imposée par ladite came (101).

2. Turbogénérateur (1) selon la revendication 1, **caractérisé en ce que** ladite came (101) est une lame métallique comportant au moins des premier, deuxième, troisième et quatrième secteurs (S1, S2, S3, S4).

3. Turbogénérateur (1) selon la revendication 2, **caractérisé en ce que**, ladite came (101) est agencée pour que dans les premier et troisième secteurs (S1, S3), lesdites pales (3) soient réglées pour être parallèles au vent apparent (Va), lesdits premier et troisième secteurs (S1, S3) étant situés avant et après les deux points placés à chacune des extrémités du diamètre dudit cercle (34) perpendiculaire à la direction du vent réel (Vr).

4. Turbogénérateur (1) selon l'une quelconque des revendications 2 ou 3, **caractérisé en ce que**, ladite came (101) est agencée pour que, dans les deuxième et quatrième secteurs (S2, S4), les pales (3) soient réglées pour avoir une incidence optimale par rapport au vent apparent (Va), lesdits deuxième et quatrième secteurs (S2, S4) étant disposés de part et d'autre des premier et troisième secteurs (S1) et (S3).

5. Turbogénérateur (1) selon la revendication 4, **caractérisé en ce que** ladite came (101) est agencée pour que lesdites pales (3) aient effectuées un changement de bord par rapport au vent apparent (Va) dans le deuxième secteur (S2) par rapport au quatrième secteur (S4) et dans le quatrième secteur (S4) par rapport au deuxième secteur (S2).

6. Turbogénérateur (1) selon l'une quelconque des revendications 4 ou 5, **caractérisé en ce que** ladite came (101) est agencée pour que l'incidence optimale choisie des pales (3) dans les deuxième et quatrième secteurs (S2, S4) corresponde à la finesse optimale choisie du profil desdites pales (3) choisi.

7. Turbogénérateur (1) selon l'une quelconque des revendications précédentes, **caractérisé en ce que** les pales (3) comportent chacune un bord d'attaque (31) et un bord de fuite (32), et agencées pour que leurs axes secondaires (33) soient respectivement situés légèrement en avant de leurs centres de poussée en direction dudit bord d'attaque (31).

8. Turbogénérateur (1) selon l'une quelconque des revendications précédentes, **caractérisé en ce que** lesdites pales (3) ont un profil biconvexe symétrique.

9. Turbogénérateur (1) selon l'une quelconque des revendications 7 à 8, **caractérisé en ce que** lesdits organes suiveurs (102) sont des biellettes disposées au droit du bord de fuite (32) à l'extrémité basse de chacune desdites pales (3), de sorte que ledit bord de fuite (32) décrive la forme de la came (101) lors d'une rotation du rotor (2) autour de son axe principal (5).

10. Turbogénérateur (1) selon l'une quelconque des revendications 1 à 9, **caractérisé en ce qu'**il est agencé pour s'orienter par rapport à la direction du vent réel (Vr) afin de positionner ladite came (101) par rapport à ladite direction du vent réel (Vr).

11. Turbogénérateur (1) selon l'une quelconque des revendications précédentes, **caractérisé en ce qu'**il comporte des moyens de débrayage dudit rotor (2) et desdites pales (3) afin de rendre leur rotation libre et de placer lesdites pales (3) parallèlement au vent réel (Vr).

12. Turbogénérateur (1) selon l'une quelconque des revendications précédentes, **caractérisé en ce que** ledit rotor (2) est couplé à un alternateur.

## Patentansprüche

1. Turbogenerator (1), der einen Träger (6), einen Rotor (2) umfasst, der geeignet ist, um eine Hauptachse (5) in Bezug auf den Träger (6) zu schwenken, und der mit mindestens zwei Schaufeln (3) versehen ist, die jeweils schwenkend um eine Sekundärachse (33) auf mindestens einer Grundplatte (4), die mit dem Rotor (2) gekoppelt ist, montiert sind, wobei der Turbogenerator (1) ein Einstellmittel (10) des Einfalls der Schaufeln (3) umfasst, das mindestens einen Nocken (101) und mindestens ein Folgeorgan (102), das fest mit jeder der Schaufeln (3) verbunden ist, umfasst und neben der Austrittskante (32) an dem unteren Ende jeder der Schaufeln angeordnet ist, wobei das Folgeorgan (102) geeignet ist, mit dem Nocken (101) zusammenzuwirken, um unabhängig jede der Schaufeln (3) auszurichten, wobei die Form des Nockens (101) derart ist, dass er eine Anpassung des optimalen Einfalls, der für jede der Schaufeln (3) ausgewählt ist, in Bezug auf den scheinbaren Wind (Va) in jedem Punkt (P1-P18) des Kreises (34), den die Sekundärachse (33) jeder Schaufel (3) bei der Drehung des Rotors (2) um seine Hauptachse (5) durchläuft, für ein definiertes Verhältnis zwischen den Werten des wahren Winds (Vr) und des linearen Winds (Vd), der von der Bewegung der Schaufeln (3) erzeugt wird, erlaubt, wobei der Nocken (101) eine Form hat, die von der Kurve, die das untere Ende der Austrittskante einer Schaufel (3) beschreibt, bestimmt wird, wenn sie an dem optimalen Einfall ist, der in Bezug auf den scheinbaren Wind (Va) an jedem Punkt des Kreises (34) ausgewählt ist, und wobei der Nocken (101) in Bezug auf den Träger (6) und auf die Grundplatte (4) entlang einer Achse parallel zu der Richtung des wahren Winds (Vr) beweglich ist, um den Einfall der Schaufeln (3), der von dem Nocken (101) auferlegt wird, variieren zu lassen.

2. Turbogenerator (1) nach Anspruch 1, **dadurch gekennzeichnet, dass** der Nocken (101) eine Metallblatt ist, das mindestens einen ersten, zweiten, dritten und vierten Sektor (S1, S2, S3, S4) umfasst.

3. Turbogenerator (1) nach Anspruch 2, **dadurch gekennzeichnet, dass** der Nocken (101) eingerichtet ist, damit die Schaufeln (3) in dem ersten und dritten Sektor (S1, S3) eingestellt sind, um zu dem scheinbaren Wind (Va) parallel zu sein, wobei der erste und der dritte Sektor (S1, S3) vor und nach den zwei Punkten liegen, die an jedem der Enden des Durchmessers des Kreises (34) senkrecht zu der Richtung des wahren Winds (Vr) platziert sind.

4. Turbogenerator (1) nach einem der Ansprüche 2 oder 3, **dadurch gekennzeichnet, dass** der Nocken (101) eingerichtet ist, damit die Schaufeln (3) in dem zweiten und vierten Sektor (S2, S4) eingestellt sind, um einen optimalen Einfall in Bezug auf den scheinbaren Wind (Va) zu haben, wobei der zweite und der vierte Sektor (S2, S4) zu beiden Seiten des ersten und des dritten Sektors (S1) und (S3) angeordnet sind.

5. Turbogenerator (1) nach Anspruch 4, **dadurch gekennzeichnet, dass** der Nocken (101) eingerichtet ist, damit die Schaufeln (3) einen Kantenwechsel in Bezug auf den scheinbaren Wind (Va) in dem zweiten Sektor (S2) in Bezug auf den vierten Sektor (S4) und in dem vierten Sektor (S4) in Bezug auf den zweiten Sektor (S2) ausgeführt haben.

6. Turbogenerator (1) nach einem der Ansprüche 4 oder 5, **dadurch gekennzeichnet, dass** der Nocken (101) eingerichtet ist, damit der optimale Einfall, der für die Schaufeln (3) in dem zweiten und vierten Sektor (S2, S4) ausgewählt ist, der optimalen ausgewählten Feinheit des ausgewählten Profils der Schaufeln (3) entspricht.

7. Turbogenerator (1) nach einem der vorhergehenden Ansprüche, **dadurch gekennzeichnet, dass** die Schaufeln (3) jeweils eine Eintrittskante (31) und eine Austrittskante (32) aufweisen und eingerichtet sind, damit ihre Sekundärachsen (33) jeweils leicht vor ihren Schubmitten in Richtung der Eintrittskarte (31) liegen.

8. Turbogenerator (1) nach einem der vorhergehenden Ansprüche, **dadurch gekennzeichnet, dass** die Schaufeln (3) ein symmetrisches bikonvexes Profil haben.

9. Turbogenerator (1) nach einem der Ansprüche 7 bis 8, **dadurch gekennzeichnet, dass** die Folgeorgane (102) Schwingarme sind, die neben der Austrittskante (32) an dem unteren Ende jeder der Schaufeln (3) derart angeordnet sind, dass die Austrittskante (32) die Form des Nockens (101) bei einer Drehung des Rotors (2) um seine Hauptachse (5) beschreibt.

10. Turbogenerator (1) nach einem der Ansprüche 1 bis 9, **dadurch gekennzeichnet, dass** er eingerichtet ist, um sich in Bezug auf die Richtung des wahren Winds (Vr) auszurichten, um den Nocken (101) in Bezug auf die Richtung des wahren Winds (Vr) zu positionieren.

11. Turbogenerator (1) nach einem der vorhergehenden Ansprüche, **dadurch gekennzeichnet, dass** er Auskuppelmittel des Rotors (2) und der Schaufeln (3) aufweist, um ihre Drehung frei zu machen und die Schaufeln (3) parallel zum wahren Wind (Vr) zu platzieren.

12. Turbogenerator (1) nach einem der vorhergehenden Ansprüche, **dadurch gekennzeichnet, dass** der Rotor (2) mit einem Wechselstromgenerator gekuppelt ist.

## Claims

1. Turbogenerator (1) comprising a support (6), a rotor (2) able to pivot about a principal axis (5) with respect to said support (6) and provided with at least two blades (3) each mounted so as to pivot about a secondary axis (33) on at least one base (4) coupled to said rotor (2), said turbogenerator (1) comprising a means (10) for adjusting the incidence of said blades (3), comprising at least one cam (101) and at least one follower member (102) secured to each of said blades (3) and disposed in line with the trailing edge (32) at the bottom end of each of said blades, the follower member (102) being able to cooperate with said cam (101) in order to orient each of said blades (3) independently, the form of said cam (101) being such that it allows an adaptation of the optimum incidence chosen of each of said blades (3) with respect to the apparent wind (Va), at each point (P1-P18) on the circle (34) travelled by said secondary axis (33) of each blade (3) when said rotor (2) is rotated about its principal axis (5), for a defined ratio between the values of the real wind (Vr) and the linear wind (Vd) generated by the movement of said blades (3), said cam (101) having a form determined by the curve described by the bottom end of the trailing edge of a blade (3) when it is at the optimum incidence chosen with respect to the apparent wind (Va) at each point on said circle (34), and said cam (101) being able to move with respect to said support (6) and said base (4) on an axis parallel to the direction of the real wind (Vr) in order to vary the incidence of the blades (3) imposed by said cam (101).

2. Turbogenerator (1) according to claim 1, **characterised in that** said cam (101) is a metal blade comprising at least first, second, third and fourth sectors (S1, S2, S3, S4).

3. Turbogenerator (1) according to claim 2, **characterised in that** said cam (101) is arranged so that, in the first and third sectors (S1, S3), said blades (3) are adjusted so as to be parallel to the apparent wind (Va), said first and third sectors (S1, S3) being situated before and after the two points placed at each of the ends of the diameter of said circle (34) perpendicular to the direction of the real wind (Vr).

4. Turbogenerator (1) according to either one of claims 2 or 3, **characterised in that** said cam (101) is arranged so that, in the second and fourth sectors (S2, S4), the blades (3) are adjusted so as to have an optimum incidence with respect to the apparent wind (Va), said second and fourth sectors (S2, S4) being disposed on either side of the first and third sectors (S1) and (S3).

5. Turbogenerator (1) according to claim 4, **characterised in that** said cam (101) is arranged so that said blades (3) have made a change of edge with respect to the apparent wind (Va) in the second sector (S2) with respect to the fourth sector (S4) and in the fourth sector (S4) with respect to the second sector (S2).

6. Turbogenerator (1) according to either one of claims 4 or 5, **characterised in that** said cam (101) is arranged so that the chosen optimum incidence of the blades (3) in the second and fourth sectors (S2, S4) corresponds to the chosen optimum fineness of the chosen profile of said blades (3).

7. Turbogenerator (1) according to any one of the preceding claims, **characterised in that** the blades (3) each comprise a leading edge (31) and a trailing edge (32), and are arranged so that their secondary axes (33) are respectively situated slightly in front of their thrust centres in the direction of said leading edge (31).

8. Turbogenerator (1) according to any one of the preceding claims, **characterised in that** said blades (3) have a symmetrical biconvex profile.

9. Turbogenerator (1) according to either one of claims 7 or 8, **characterised in that** said follower members (102) are links disposed in line with the trailing edge (32) at the bottom end of each of said blades (3), so that said trailing edge (32) describes the form of the cam (101) during a rotation of the rotor (2) about its principal axis (5).

10. Turbogenerator (1) according to any one of claims 1 to 9, **characterised in that** it is arranged so as to be oriented with respect to the direction of the real wind (Vr) in order to position said cam (101) with respect to said direction of the real wind (Vr).

11. Turbogenerator (1) according to any one of the preceding claims, **characterised in that** it comprises means for disengaging said rotor (2) and said blades (3) in order to make their rotation free and to place said blades (3) parallel to the real wind (Vr).

12. Turbogenerator (1) according to any one of the preceding claims, **characterised in that** said rotor (2) is coupled to an alternator.
